**Europäisches Patentamt**

**European Patent Office**

**Office européen des brevets**

(19)

(11) **EP 1 315 025 A1**

(12) **EUROPÄISCHE PATENTANMELDUNG**

(43) Veröffentlichungstag:
28.05.2003 Patentblatt 2003/22

(51) Int Cl.[7]: **G02F 1/225**, G02F 1/17

(21) Anmeldenummer: 02026102.0

(22) Anmeldetag: 22.11.2002

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **22.11.2001 DE 10157218**

(71) Anmelder: **SIEMENS AKTIENGESELLSCHAFT**
**80333 München (DE)**

(72) Erfinder: **Noe, Reinhold, Prof.**
**33100 Paderborn (DE)**

(54) **Modulator und dazugehöriges Verfahren für eine optische Modulation**

(57) Bei diesem Modulator (MO) und dem dazugehörigen Verfahren für eine optische Modulation werden in beiden Armen (BR1,BR2) eines Interferometers, deren optische Weglängen sich um eine halbe Lichtwellenlänge unterscheiden, jeweils ein Elektroabsorptions-modulator vorgesehen (MO1,MO2), die mit Gegentaktspannungen angesteuert werden. Auf diese Weise lassen sich wahlweise eine chirparme Amplitudenumtastung und eine chirparme Phasenumtastung realisieren bei äußerst kleinen notwendigen Steuerspannungen.

FIG 1

**Beschreibung**

Die Erfindung betrifft einen Modulator für eine optische Modulation nach dem Oberbegriff des Patentanspruchs 1 und ein dazugehöriges Verfahren nach dem Oberbegriff des Patentanspruchs 6.

Absorptionsmodulatoren, also absorptiv wirkende optische Modulatoren wie z.B. Elektroabsorptionsmodulatoren, Modulatoren mit Franz-Keldysh- oder mit quantenunterstütztem Stark-Effekt besitzen meist unerwünschten Chirp. Demzufolge erlauben sie auch keine oder keine reine Phasenmodulation oder Phasenumtastung. Optische Mach-Zehnder-Modulatoren, die z.B. in Electron. Lett. 30(1994)12, S. 949-950 beschrieben werden und sowohl in Lithiumniobat wie auch in III/V-Halbleitermaterialien gefertigt werden können, benötigen in der Regel große Treiberspannungen, insbesondere bei der Verwendung zur Phasenumtastung. Gesucht ist ein Modulator mit kleinen Treiberspannungen, der sich möglichst auch für binäre Phasenumtastung verwenden lassen soll. Durch unvollständige Modulation, d.h. unvollständige Aussteuerung, kann man sich bei Mach-Zehnder-Modulatoren zwar niedrigere Treiberspannungen erkaufen, doch das erhöht die Genauigkeitsanforderungen bei der Herstellung.

Aufgabe der Erfindung ist es daher, eine weiteren Modulator für eine optische Modulation anzugeben.

Diese Aufgabe wird durch einen in Anspruch 1 angegebenen Modulator für eine optische Modulation gelöst. Im Patentanspruch 6 wird ein dazugehöriges Verfahren angegeben.

Vorteilhafte Weiterbildungen sind in den Unteransprüchen angegeben.

Die Lösung des Problems liegt darin, daß Modulator, der ein mindestens zweiarmiges Interferometer aufweist, in mindestens einem dieser Interferometerarme einen Absorptionsmodulator als modulierendes Mittel aufweist. Vorzugsweise ist in jedem der beiden Interferometerarme je ein Absorptionsmodulator wie z.B. ein Elektroabsorptionsmodulator vorgesehen, die mit Gegentaktsignalen angesteuert werden. Dabei ist es günstig, wenn erster und zweiter Interferometerarm zwischen Verzweiger und Zusammenführer eine optische Weglängendifferenz gleich einem ungeradzahligen Vielfachen einer halben Wellenlänge eines auftretenden optischen Signals aufweisen, wenn die Modulatorausgangssignale der beiden Absorptionsmodulatoren bei der Überlagerung im Zusammenführer denselben Amplitudenbetrag aufweisen. Auf diese Weise kann die Phase der optischen Welle um $\pi$ umgetastet werden, denn bei einem Extremum des Gegentaktsignals transmittiert nur der eine, und im anderen Extremum des Gegentaktsignals nur der andere Absorptionsmodulator. Zwischen diesen beiden extremen Zuständen gibt es einen weiteren, in welchem der erfindungsgemäße Modulator gar kein Licht abgibt. Bei Aussteuerung nur in einer Hälfte des Aussteuerbereichs erhält man einen mehr oder weniger reinen Amplitudenmodulator. Ob Phasenumtastung oder Amplitudenmodulation, in jedem Fall ist Betrieb mit einem Chirp möglich, der geringer als bei Verwendung eines einzigen Elektroabsorptionsmodulators ist, und der Chirp besitzt eine Symmetrie. Besonders vorteilhaft sind die bei Absorptionsmodulatoren sehr kleinen erforderlichen Ansteuerspannungen. Da Mach-Zehnder-Modulatoren nach dem Stand der Technik für die Phasenumtastung eine besonders hohe Treiberspannung benötigen, eignet sich der erfindungsgemäße Modulator insbesondere für die Phasenumtastung.

Die Erfindung wird anhand von Ausführungsbeispielen näher erläutert.

Es zeigen

Figur 1    einen erfindungsgemäßen Modulator, monolithisch integriert mit einem Laser und einem optischen Verstärker,

Figur 2    Transferfunktionen eines erfindungsgemäßen Modulators und von Absorptionsmodulatoren,

Figur 3    weitere Transferfunktionen eines erfindungsgemäßen Modulators und von Absorptionsmodulatoren,

Figur 4    Beträge von Modulatortransferfunktionen als Funktion eines normierten Steuersignals

Figur 5    Modulatorchirpfaktoren als Funktion eines normierten Steuersignals.

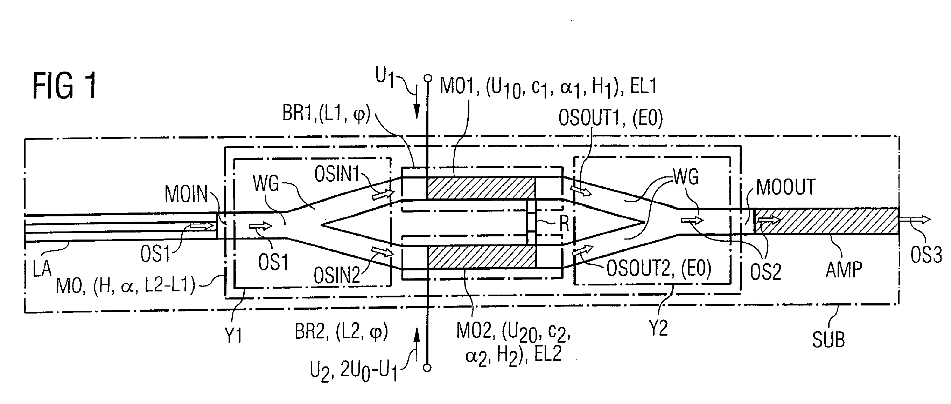

**Figur 1** zeigt einen erfindungsgemäßen Modulator MO, monolithisch integriert mit einem Laser LA und einem optischen Verstärker AMP auf einem Substrat SUB, das bevorzugt einen optoelektronischer Halbleiter wie z.B. InGaAlAs, InP aufweist. Auf dem gesamten Substrat SUB laufen optische Signale vorzugsweise in einem teilweise verzweigten Wellenleiter WG. Im Laser LA, der beispielsweise als Laser mit verteilter Rückkopplung, auch DFB-Laser genannt, ausgelegt ist, wird ein erstes optisches Signal OS1 erzeugt, das über einen Wellenleiter WG dem Modulatoreingang MOIN des Modulators MO zugeführt wird. Vom Modulatoreingang MOIN aus wird das erste optische Signal OS1 in einem vorzugsweise als Wellenleitergabel ausgebildeten Verzweiger Y1 in ein erstes und zweites Absorptionsmodulatoreingangssignal OSIN1, OSIN2 aufgeteilt, das je einen ersten bzw. zweiten Interferometerarm BR1, BR2 durchläuft. Im ersten bzw. zweiten Interferometerarm BR1, BR2 durchlaufen erstes bzw. zweites Absorptionsodulatoreingangssignal OSIN1, OSIN2 einen ersten bzw. zweiten Absorptionsmodulator MO1, MO2 als erstes bzw. zweites modulierendes Mittel MO1, MO2 und treten als erstes bzw. zweites Absorptionsodulatorausgangssignal OSOUT1, OSOUT2 aus. Diese Signale werden an den Ausgängen des ersten bzw. zweiten Interferometerarms BR1, BR2 durch einen vorzugsweise als Wellenleitergabel ausgebildeten Zusammenführer Y2 wieder zusammengefaßt in ein zweites optisches Signal OS2. Der Ausgangsarm des Zusammenführers Y2, der gleichzeitig den Modulatorausgang MOOUT des Modulators MO bildet, ist bevorzugt einmodig ausgebildet, so daß das zweite optische Signal OS2 nur den Grundmodus umfaßt. Anschließend durchläuft das zweite optische Signal OS2 einen optischen Verstärker AMP und verläßt diesen verstärkt als drittes optisches Signal OS3. Der optische Verstärker AMP und de Laser LA sind nicht erfindungswesentlich.

Als Absorptionsmodulatoren MO1, MO2 können absorptiv wirkende optische Modulatoren wie z.B. Elektroabsorptionsmodulatoren, Modulatoren mit Franz-Keldysh- oder mit quantenunterstütztem Stark-Effekt eingesetzt werden. Die Signalübertragung des ersten bzw. zweiten Absorptionsmodulators MO1, MO2 läßt sich ohne Beschränkung der Allgemeinheit wenigstens näherungsweise durch eine erste bzw. zweite Absorptionstransferfunktion $H_1(U_1)$=exp$(-(1+j\alpha_1)c_1(U_1-U_{10}))$ bzw. $H_2(U_2)$=exp$(-(1+j\alpha_2)c_2(U_2-U_{20}))$ mit i = 1 bzw. 2 ausdrücken, mit der einfallende Feldstärken oder Amplituden übertragen werden. Dabei sind $\alpha_1$, $\alpha_2$ ein erster bzw. zweiter Chirpfaktor, welcher Wellenamplitude und Wellenphase koppelt, $U_1$, $U_2$ eine erste bzw. zweite Steuerspannung, $U_{10}$, $U_{20}$ eine erste bzw. zweite Steuerspannungsablage, $c_1$, $c_2$ eine erste bzw. zweite Absorptionsempfindlichkeit, die jeweils dem ersten bzw. zweiten Absorptionsmodulator MO1, MO2 zuzuordnen sind. Verzweiger Y1 und Zusammenführer Y2 werden bevorzugt als symmetrische Wellenleitergabeln ausgebildet. In diesem Fall ergibt sich eine Modulatortransferfunktion $H$ als Quotient der Signalamplitude des zweiten optischen Signals OS2 geteilt durch die Signalamplitude des ersten optischen Signals OS1, welche unter Vernachlässigung einer konstanten Phasenverzögerung gleich

$$H = \frac{1}{2}\left(\exp\left(-\left(1 + j\alpha_1\right)c_1\left(U_1 - U_{10}\right)\right) + e^{-j\varphi}\exp\left(-\left(1 + j\alpha_2\right)c_2\left(U_2 - U_{20}\right)\right)\right)$$

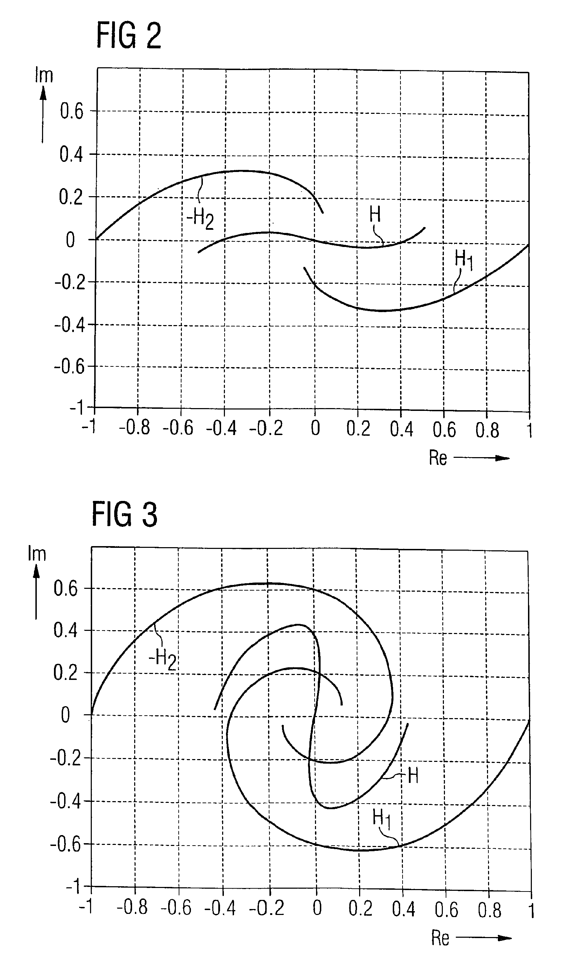

ist. Dabei ist $\varphi$ eine Phasenverzögerung des zweiten Interferometerarms BR2 gegenüber dem ersten Interferometerarm BR1. Erster und zweiter Absorptionsmodulator MO1, MO2 werden bevorzugt gleich ausgebildet, so daß $\alpha_1=\alpha_2$ und $U_{10}=U_{20}$ gilt. Erfindungsgemäß werden erster und zweiter Absorptionsmodulator MO1, MO2 mit unterschiedlichen ersten bzw. zweiten Steuerspannungen $U_1$, $U_2$ angesteuert. Es ist besonders vorteilhaft, als gegenphasig ausgebildete erste und zweite Steuerspannungen $U_1$, $U_2$ mit $U_1+U_2=2U_0$, $U_2=2U_0-U_1$ einzusetzen, wobei $U_0$ eine als konstant ausgebildete mittlere Steuerspannung $U_0$ ist. Erste und zweite Steuerspannung $U_1$, $U_2$ bilden in diesem Fall Gegentaktsignale $U_1$, $U_2$ mit $U_2=2U_0-U_1$. Außerdem ist es vorteilhaft, die Phasenverzögerung $\varphi$, welche sich für mit der mittleren Steuerspannung $U_0$ identische erste und zweite Steuerspannungen $U_1$, $U_2$ entsprechend $U_1=U_0$, $U_2=U_0$ ergibt, gleich einem ungeradzahligen Vielfachen von $\pi$ zu wählen. Dies erfolgt im einfachsten Fall durch unterscheidliche Ausgestaltung von erstem Interferometerarm BR1 und zweitem Interferometerarm BR2, beispielsweise durch unterschiedliche Längen, Brechzahlsprünge, Breiten, Tiefen oder Temperaturen, so daß eine erste optische Weglänge L1 des ersten Interferometerarms BR1 und eine zweite optische Weglänge des zweiten Interferometerarms BR2, jeweils zwischen Verzweiger Y1 und Zusammenführer Y2 gemessen, sich um eine optische Weglängendifferenz L2-L1 unterscheiden, die gleich einem ungeradzahligen Vielfachen einer halben Wellenlänge $\lambda$ des ersten oder zweiten optischen Signals OS1, OS2 ist. Zweck dieser Wahl der Phasenverzögerung $\varphi$ und optischen Weglängendifferenz L2-L1 ist es, daß sich erstes und zweites Absorptionsmodulatorausgangssignal OSOUT1, OSOUT2 bei ihrer Überlagerung im Zusammenführer Y2 auslöschen, wenn sie dort dieselben Amplitudenbeträge E0 besitzen. Unter den obigen Voraussetzungen muß dafür gelten $U_1=U_2=U_0$. Unter den obigen Voraussetzungen vereinfacht sich die Modulatortransferfunktion $H$ zu $H$ = exp$(-(1+j\alpha_1)c_1(U_0-U_{10}))$sinh$((1+j\alpha_1)c_1(U_1-U_0))$. Der Expoentialterm bestimmt die mittlere Dämpfung, der Hyperbelsinusterm die Modulationseigenschaften. **Figur 2** zeigt die Ortskurven der ersten Absorptionstransferfunktion $H_1$, des Negativen $-H_2$ der zweiten Absorptionstransferfunktion $H_2$ und der Modulatortransferfunktion $H$ nach Realteil Re und Imaginärteil Im dargestellt bei Variation der ersten Steuerspannung $U_1$ um die mittlere Steuerspannung $U_0$ herum. Dabei wurden erster und zweiter Chirpfaktor $\alpha_1$, $\alpha_2$ gleich 1 gewählt. **Figur 3** ist formal identisch mit Figur 2, nur sind erster und zweiter Chirpfaktor $\alpha_1$, $\alpha_2$ gleich 3 gewählt und die Amplituden der Signale $U_1-U_0$, $U_2-U_0$ wurden gedrittelt. In jedem Fall ist die Modulatortransferfunktion $H$ punktsymmetrisch bezüglich des bei der mittleren Steuerspannung $U_0$ erreichten komplexen Werts 0+j0, d.h. Null. Durch Polaritätswechsel der Differenz $U_1-U_0$ zwischen erster Steuerspannung $U_1$ und mittlerer Steuerspannung $U_0$ wird eine Phasenumtastung des zweiten optischen Signals OS2 bewirkt. Durch abwechselnde Wahl einer Differenz $U_1-U_0$ zwischen erster Steuerspannung $U_1$ und mittlerer Steuerspannung $U_0$ ungleich Null bzw. gleich Null wird eine Intensitätsmodulation des zweiten optischen Signals OS2 bewirkt. Bei umgekehrten Vorzeichen von erstem und zweitem Chirpfaktor $\alpha_1$, $\alpha_2$ ergeben sich Transferfunktionen $H_1$, $H_2$, $H$, die mit den oben dargestellten identisch sind mit Ausnahme eines Vorzeichenwechsels des jeweiligen Imaginärteils Im.

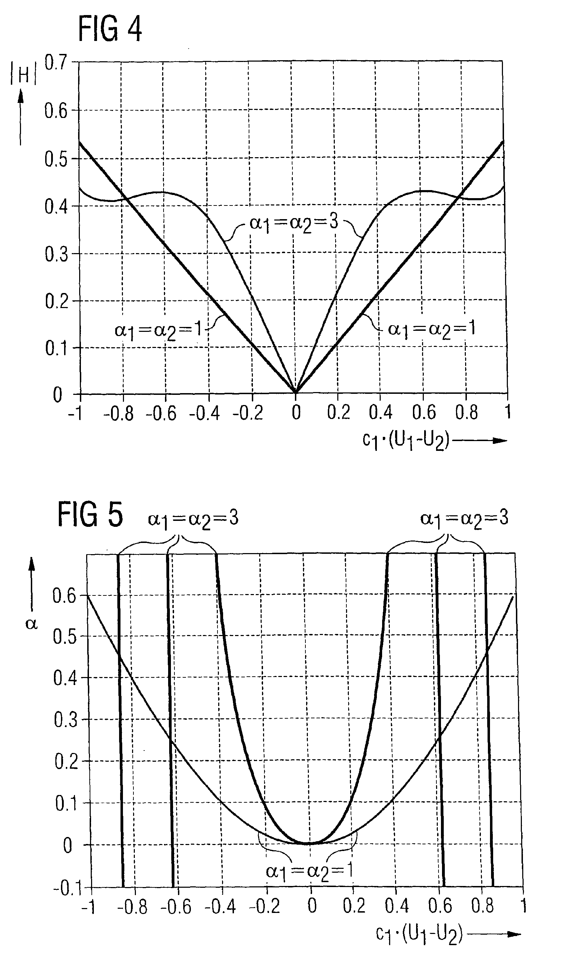

Der Betrag $|H|$ der Modulatortransferfunktion $H$ ist in **Figur 4** angegeben als Funktion eines normierten Steuersignals $c_1(U_1-U_0)$, welches eine lineare Funktion der ersten Steuerspannung $U_1$ und wegen $U_2=2U_0-U_1$ auch der zweiten Steuerspannung $U_2$ ist, und zwar für zwei Fälle. Im einen besitzen die identisch gewählten ersten und zweiten Chirpfaktoren $\alpha_1$, $\alpha_2$ den Wert $\alpha_1=\alpha_1=1$, im anderen den Wert $\alpha_1=\alpha_1=3$. Im letzteren Fall ergibt sich, wie auch aus Figur 3 ersichtlich ist, eine Begrenzung des Betrags $|H|$ der Modulatortransferfunktion $H$ für überschießende Werte des normierten Steuersignals $c_1(U_1-U_0)$, d.h. auch der ersten Steuerspannung $U_1$. Dies kann in manchen Fällen nützlich sein. Der Betrag |*H*| der Modulatortransferfunktion *H* besitzt eine gerade Symmetrie bezüglich des Punkts $U_1=U_0$.

Aus der Modulatortransferfunktion *H* läßt sich der Modulatorchirpfaktor $\alpha$ angeben durch

$$\alpha = \frac{d \, \text{Im}(\ln H)/dU_1}{d \, \text{Re}(\ln H)/dU_1}.$$

Der Modulatorchirpfaktor $\alpha$ ist in **Figur 5** angegeben als Funktion des normierten Steuersignals $c_1(U_1-U_0)$, und zwar für zwei Fälle. Im einen besitzen die identisch gewählten ersten und zweiten Chirpfaktoren $\alpha_1$, $\alpha_2$ wieder den Wert $\alpha_1=\alpha_1=1$, im anderen wieder den Wert $\alpha_1=\alpha_1=3$. Im letzteren Fall ergeben sich Polstellen dort, wo der Betrag |*H*| der Modulatortransferfunktion *H* eine waagrechte Tangente besitzt. Der Modulatorchirpfaktor $\alpha$ besitzt eine ungerade Symmetrie bezüglich des Punkts $U_1=U_0$.

Bei nichtnegativem oder nichtpositivem normiertem Steuersignal $c_1(U_1-U_0)$ entsprechend $c_1(U_1-U_0)\geq0$ bzw. $c_1(U_1-U_0)\leq0$ erreicht man eine Amplitudenumtastung des zweiten optischen Signals OS2, ohne Phasenumtastung. Bei Ausnutzung beider Polaritäten des normierten Steuersignals $c_1(U_1-U_0)$ läßt sich auch die Phase umtasten. Eine binäre Phasenumtastung ergibt sich durch Vorzeichenumkehr des normierten Steuersignals $c_1(U_1-U_0)$.

Bei Aussteuerung nur in einer Hälfte des Aussteuerbereichs erhält man einen mehr oder weniger reinen Amplitudenmodulator. Erste und zweite Spannung $U_1$, $U_2$ werden dem ersten bzw. zweiten Absorptionsmodulator MO1, MO2 über eine erste bzw. zweite Elektrode EL1, EL2 zugeleitet. Insbesondere für breitbandige, hochfrequente Modulation, wie sie für die optische Datenübertragung bei mehr als 10Gbit/s benötigt wird, ist es günstig, die erste bzw. zweite Elektrode EL1, EL2 als Wanderwellenelektroden auszuführen. In Figur 1 werden zu diesem Zweck erste und zweite Spannung $U_1$, $U_2$ kodirektional mit erstem bzw. zweitem Absorptionsmodulatoreingangssignal OSIN1, OSIN2 der ersten bzw. zweiten Elektrode EL1, EL2 zugeleitet. Dort, wo erstes bzw. zweites Absorptionsmodulatorausgangssignal OSOUT1, OSOUT2 den ersten bzw. zweiten Absorptionsmodulator MO1, MO2 verlassen, sind erste und zweite Elektrode EL1, EL2 über einen Widerstand R, der monolithisch auf dem Substrat SUB aufgebracht sein kann, miteinander verbunden, so daß elektrische Stehwellen unterdrückt werden.

Der Modulator MO und seine Bestandteile Y1, Y2, BR1, BR2 werden vorzugsweise mit polarisationserhaltenden oder mit nichtdoppelbrechenden Wellenleitern WG realisiert, damit im Zusammenführer Y2 die Absorptionsmodulatorausgangssignale OSOUT1, OSOUT2 polarisationsrichtig überlagert werden.

Weitere Ausgestaltungen der Erfindung betreffen andere Interferometer, z.B. vom Michelson-Typ, oder Interferometer, in welchen mehr als zwei Signale überlagert werden.

Neben optoelektronischen Halbleitern kommen zur Realisierung des erfindungsgemäßen Modulators MO auch andere Materialien in Frage, wie z.B. Flüssigkristalle, ggf. eingebettet in Polymersubstraten.

Zwei erfindungsgemäße Modulatoren können kombiniert zur Erzeugung von quaternärer Phasenumtastung (QPSK) eingesetzt werden, wenn jeder von ihnen in einem Arm eines weiteren Interferometers untergebracht ist, wobei diese Arme Phasenverschiebungen der optischen Signale aufweisen, die sich um ein ungeradzahliges Vielfaches von $\pi/2$ unterscheiden.

**Patentansprüche**

1. Modulator (MO) für eine optische Modulation mit einem ersten optischen Signal (OS1), das an einem Modulatoreingang (MOIN) in den Modulator (MO) eingespeist, dort in einem Verzweiger (Y1) auf mindestens einen ersten und zweiten Interferometerarm (BR1, BR2) aufgeteilt wird, nach Verlassen von erstem und zweitem Interferometerarm (BR1, BR2) in einem Zusammenführer (Y2) zu einem zweiten optischen Signal (OS2) zusammengeführt wird, mit mindestens einem ersten oder zweiten modulierenden Mittel (MO1, MO2) in erstem bzw. zweitem Interferometerarm (BR1, BR2),
   **dadurch gekennzeichnet,**
   **dass** in erstem oder zweitem Interferometerarm (BR1, BR2) ein Absorptionsmodulator (MO1, MO2) als modulierendes Mittel (MO1, MO2) vorgesehen ist.

2. Anordnung nach Anspruch 1,
   **dadurch gekennzeichnet,**
   **dass** in erstem und zweitem Interferometerarm (BR1, BR2) je ein erster bzw. zweiter Absorptionsmodulator (MO1, MO2) als modulierende Mittel (MO1, MO2) vorgesehen sind.

3. Anordnung nach Anspruch 2,
   **dadurch gekennzeichnet,**

**dass** Gegentaktsignale ($U_1$, $U_2$, $U_2=2U_0-U_1$) zur Ansteuerung von erstem und zweitem Absorptionsmodulator (MO1, MO2) im Gegentakt vorgesehen sind.

**4.** Anordnung nach einem der Ansprüche 1 bis 3,
**dadurch gekennzeichnet,**
**dass** erster und zweiter Interferometerarm (BR1, BR2) zwischen Verzweiger (Y1) und Zusammenführer (Y2) eine optische Weglängendifferenz (L2-L1) gleich einem ungeradzahligen Vielfachen einer halben Wellenlänge ($\lambda$) des ersten optischen Signals (OS1) aufweisen, wenn erstes und zweites Modulatorausgangssignal (OSOUT1, OSOUT2) bei der Überlagerung im Zusammenführer (Y2) denselben Amplitudenbetrag (E0) aufweisen.

**5.** Anordnung nach Anspruch 4,
**dadurch gekennzeichnet,**
**dass** erster und zweiter Interferometerarm (BR1, BR2) mit Ausnahme der optischen Weglängendifferenz (L2-L1) identisch ausgebildet sind.

**6.** Verfahren für eine optische Modulation mit einem ersten optischen Signal (OS1), das an einem Modulatoreingang (MOIN) in einen Modulator (MO) eingespeist wird, dort in einem Verzweiger (Y1) auf mindestens einen ersten und zweiten Interferometerarm (BR1, BR2) aufgeteilt wird, nach Verlassen von erstem und zweitem Interferometerarm (BR1, BR2) in einem Zusammenführer (Y2) zu einem zweiten optischen Signal (OS2) zusammengeführt wird, mit mindestens einem ersten oder zweiten modulierenden Mittel (MO1, MO2) in erstem bzw. zweitem Interferometerarm (BR1, BR2),
**dadurch gekennzeichnet,**
**dass** in erstem oder zweitem Interferometerarm (BR1, BR2) ein Absorptionsmodulator (MO1, MO2) als modulierendes Mittel (MO1, MO2) vorgesehen wird.

**7.** Verfahren nach Anspruch 6,
**dadurch gekennzeichnet,**
**dass** in erstem und zweitem Interferometerarm (BR1, BR2) je ein erster bzw. zweiter Absorptionsmodulator (MO1, MO2) als modulierende Mittel (MO1, MO2) vorgesehen werden.

**8.** Verfahren nach Anspruch 7,
**dadurch gekennzeichnet,**
**dass** erster und zweiter Absorptionsmodulator (MO1, MO2) im Gegentakt angesteuert werden.

**9.** Verfahren nach einem der Ansprüche 6 bis 8,
**dadurch gekennzeichnet,**
**dass** erster und zweiter Interferometerarm (BR1, BR2) zwischen Verzweiger (Y1) und Zusammenführer (Y2) so ausgebildet werden, daß sie, wenn erstes und zweites Modulatorausgangssignal (OSOUT1, OSOUT2) bei der Überlagerung im Zusammenführer (Y2) denselben Amplitudenbetrag (E0) aufweisen, eine optische Weglängendifferenz (L2-L1) gleich einem ungeradzahligen Vielfachen einer halben Wellenlänge ($\lambda$) des ersten optischen Signals (OS1) aufweisen.

**10.** Verfahren nach Anspruch 9,
**dadurch gekennzeichnet,**
**dass** erster und zweiter Interferometerarm (BR1, BR2) mit Ausnahme der optischen Weglängendifferenz (L2-L1) identisch ausgebildet werden.

FIG 1

## FIG 2

## FIG 3

FIG 4

FIG 5

**Europäisches Patentamt**

# EUROPÄISCHER RECHERCHENBERICHT

Nummer der Anmeldung

EP 02 02 6102

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 694 504 A (YEVICK DAVID OWEN ET AL) 2. Dezember 1997 (1997-12-02) * Spalte 2, Zeile 24 - Zeile 57 * * Spalte 5, Zeile 21 - Spalte 6, Zeile 23; Abbildungen 1,2A,3A * --- | 1-10 | G02F1/225 G02F1/17 |
| X | US 5 926 297 A (NISHIMOTO HIROSHI ET AL) 20. Juli 1999 (1999-07-20) | 1-3,6-8 | |
| A | * Spalte 9, Zeile 36 - Spalte 14, Zeile 54; Abbildungen 8,9,11,13A,14,19,21,22 * --- | 4,5,9,10 | |
| X | GYU-WOONG LEE ET AL: "Linearization of a narrowband analog optical link using integrated dual electroabsorption modulator" MICROWAVE PHOTONICS, 1999. MWP '99. INTERNATIONAL TOPICAL MEETING ON MELBOURNE, VIC., AUSTRALIA 17-19 NOV. 1999, PISCATAWAY, NJ, USA,IEEE, US, 17. November 1999 (1999-11-17), Seiten 21-24, XP010367423 ISBN: 0-7803-5558-X * Seite 22, rechte Spalte, Zeile 1 - Zeile 23; Abbildung 2 * --- | 1,2,6,7 | |
| | | | **RECHERCHIERTE SACHGEBIETE (Int.Cl.7)** |
| | | | G02F |
| X | PATENT ABSTRACTS OF JAPAN vol. 015, no. 347 (P-1246), 3. September 1991 (1991-09-03) & JP 03 131825 A (HITACHI LTD), 5. Juni 1991 (1991-06-05) | 1,2,6,7 | |
| A | * Zusammenfassung * --- | 3-5,8-10 | |
| X | PATENT ABSTRACTS OF JAPAN vol. 1995, no. 05, 30. Juni 1995 (1995-06-30) & JP 07 049473 A (HITACHI LTD), 21. Februar 1995 (1995-02-21) * Zusammenfassung * ----- | 1,2,6,7 | |

Der vorliegende Recherchenbericht wurde für alle Patentansprüche erstellt

| Recherchenort | Abschlußdatum der Recherche | Prüfer |
|---|---|---|
| MÜNCHEN | 27. Februar 2003 | Wahl, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 02 02 6102

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-02-2003

| Im Recherchenbericht angeführtes Patentdokument | | Datum der Veröffentlichung | Mitglied(er) der Patentfamilie | | Datum der Veröffentlichung |
|---|---|---|---|---|---|
| US 5694504 | A | 02-12-1997 | GB | 2302738 A | 29-01-1997 |
| | | | CA | 2176099 A1 | 29-12-1996 |
| | | | JP | 9021986 A | 21-01-1997 |
| US 5926297 | A | 20-07-1999 | JP | 10079705 A | 24-03-1998 |
| | | | GB | 2361369 A ,B | 17-10-2001 |
| | | | GB | 2316821 A ,B | 04-03-1998 |
| JP 03131825 | A | 05-06-1991 | KEINE | | |
| JP 07049473 | A | 21-02-1995 | KEINE | | |

EPO FORM P0461

Für nähere Einzelheiten zu diesem Anhang : siehe Amtsblatt des Europäischen Patentamts, Nr.12/82